# EUROPÄISCHE PATENTSCHRIFT

(11) **EP 3 184 996 B1**
(45) Veröffentlichungstag und Bekanntmachung des Hinweises auf die Patenterteilung: **27.01.2021**
(21) Anmeldenummer: 16204800.3
(22) Anmeldetag: 16.12.2016
(51) Int. Cl.: G01N 21/956

(54) **INSPEKTIONSVORRICHTUNG UND VERFAHREN ZUM VERIFIZIEREN EINES CHIPKARTENHALBZEUGS**
INSPECTION DEVICE AND METHOD FOR VERIFYING A SEMIFINISHED CHIP CARD PRODUCT
DISPOSITIF D'INSPECTION ET PROCÉDÉ DE VÉRIFICATION D'UN DEMI-PRODUIT DE CARTE À PUCE

(30) Priorität: 23.12.2015 DE 102015122717
(43) Veröffentlichungstag der Anmeldung: 28.06.2017
(73) Patentinhaber: Bundesdruckerei GmbH, 10969 Berlin (DE)
(72) Erfinder: FERBER, Alexander, 12105 Berlin (DE); KLOESER, Joachim, 10779 Berlin (DE); ROSSEK, KAI, 12349 Berlin (DE); MUTH, Oliver, 12277 Berlin (DE)
(74) Vertreter: Patentship Patentanwaltsgesellschaft mbH

(56) Entgegenhaltungen:
- EP-A1- 1 598 861
- EP-A1- 2 583 826
- JP-A- 2012 058 134

## Beschreibung

Die vorliegende Erfindung betrifft eine Inspektionsvorrichtung und ein Verfahren zum Verifizieren eines Halbzeugs zum Herstellen einer Chipkarte mit einer durch eine Laserschneidkante begrenzten Aussparung zur Aufnahme eines elektronischen Schaltkreises in Form eines Chips oder Chipmoduls.

Die Offenlegungsschrift EP 2 583 826 A1 beschreibt die Herstellung eines Inlays mit integriertem Regelkreis.

Die Offenlegungsschrift JP 2012 058 134 A beschreibt ein Verfahren zum Prüfen eines Objekts.

Die Offenlegungsschrift EP 1 598 861 A1 offenbart ein Verfahren und eine Vorrichtung zum Überprüfen von Spezifikationen einer Aussparung, die in einem Kartenkörper gebildet ist. Die Aussparung wurde aus dem Kartenkörper gefräst.

Moderne elektronische Identifikationsdokumente, beispielsweise elektronische Personalausweise, sind oftmals in Form einer Chipkarte ausgebildet. Chipkarten können ferner als Kreditkarten, Bankkarten, elektronische Börsen usw. ausgebildet sein und zur bargeldlosen Abwicklung von Transaktionen, wie beispielsweise zum Entrichten eines Beförderungsentgelts im Personennahverkehr oder zum Bezahlen eines Kaufpreises für eine Ware oder Dienstleistung, dienen.

Eine Chipkarte umfasst in der Regel einen Kartenkörper und einen in den Kartenkörper integrierten elektronischen Schaltkreis in Form eines Chips oder Chipmoduls, der zur Speicherung, Verarbeitung und/oder Erkennung von Informationen ausgebildet ist, die kontaktlos und/oder kontaktbehaftet mit einem Lesegerät ausgetauscht werden können.

Üblicherweise besteht der Kartenkörper einer Chipkarte aus mehreren Folien oder Lagen aus Kunststoff. Aus der WO2011/003518 und der DE102011001722 sind beispielhafte Herstellungsverfahren bekannt, bei denen ein auf einer Trägerfolie beispielsweise mittels Klebstoff befestigter elektronischer Schaltkreis in Form eines Chips oder Chipmoduls passgenau in eine Aussparung eingebracht wird, die in einer sogenannten Ausgleichsfolie ausgebildet ist. Dabei kann insbesondere bei Chipkarten, die kontaktlos mit einem Lesegerät kommunizieren, die Trägerfolie eine Antennenstruktur umfassen, die mit dem elektronischen Schaltkreis elektrisch verbunden ist.

Oftmals wird die Aussparung zur Aufnahme des elektronischen Schaltkreises in der Ausgleichsfolie mittels Laserschneiden erzeugt. Zur Fertigstellung einer Chipkarte können eine oder mehrere weitere Folien bzw. Lagen die Ober- und/oder Unterseite des aus Trägerfolie, Chip und Ausgleichsfolie bestehenden Halbzeugs, das auch als Inlay bezeichnet wird, laminiert werden, um den elektronischen Schaltkreis in den dadurch entstehenden Kartenkörper einzubetten.

Fehler bei der Ausrichtung und Anordnung des elektronischen Schaltkreises relativ zu der Aussparung können dazu führen, dass die fertiggestellte Chipkarte von vornherein nicht funktionsfähig ist oder unter den normalen Einflüssen, denen eine Chipkarte beim Einsatz ausgesetzt ist, nach kurzer Zeit im Feld ihre Funktionsfähigkeit verliert.

Daher besteht eine Aufgabe der vorliegenden Erfindung darin, ein Konzept zum automatisierten Verifizieren eines Chipkartenhalbzeugs mit einer durch eine Laserschneidkante begrenzten Aussparung zur Aufnahme eines elektronischen Schaltkreises in Form eines Chips oder Chipmoduls zu schaffen, um insbesondere die vorstehend beschriebenen Probleme bei der Herstellung von Chipkarten vermeiden zu können.

Diese Aufgabe wird durch die Merkmale der unabhängigen Ansprüche gelöst. Vorteilhafte Ausbildungsformen sind Gegenstand der abhängigen Patentansprüche, der Beschreibung sowie der Figuren.

Die Erfindung basiert auf der überraschenden Entdeckung, dass aufgrund optischer Effekte, die möglicherweise den optischen Effekten ähnlich sind, die bei optischen Linsen, Prismen oder Lichtleitern auftreten, die Laserschneidkante insbesondere bei Beleuchtung eines Chipkartenhalbzeugs mit UV-Licht in einer Bildaufnahme des Chipkartenhalbzeugs als Bereich bzw. räumliche Struktur erhöhter Intensität deutlich hervortritt, so dass auf dieser Grundlage gut der Verlauf der Laserschneidkante bestimmt und das Chipkartenhalbzeug verifiziert werden kann.

Somit betrifft die Erfindung gemäß einem ersten Aspekt eine Inspektionsvorrichtung zum Verifizieren eines Halbzeugs zum Herstellen einer Chipkarte mit einer durch eine Laserschneidkante begrenzten Aussparung zur Aufnahme eines elektronischen Schaltkreises. Die Inspektionsvorrichtung umfasst eine Beleuchtungsquelle, welche ausgebildet ist, das Halbzeug mit Licht einer vorbestimmten Wellenlänge zu beleuchten, eine Bildkamera, welche ausgebildet ist, eine Bildaufnahme des beleuchteten Halbzeugs mit der durch die Laserschneidkante begrenzten Aussparung zu erfassen, und einen Prozessor, welcher ausgebildet ist, in der erfassten Bildaufnahme einen umlaufenden Bereich mit einer Lichtintensität zu erfassen, welche größer als eine Lichtintensität eines in der erfassten Bildaufnahme außerhalb des umlaufenden Bereichs liegenden Bereichs ist, um den Verlauf der Laserschneidkante in der erfassten Bildaufnahme zu bestimmen und das Halbzeug auf der Grundlage des Verlaufs der Laserschneidkante zu verifizieren, wobei die Laserschneidkante als Sicherheitsmerkmal der Chipkarte dient, und wobei die Inspektionsvorrichtung so ausgebildet ist, dass das Halbzeug zwischen der Beleuchtungsquelle und der Bildkamera anordnenbar ist.

Dadurch wird ein effizientes Konzept zum automatisierten Verifizieren eines Halbzeugs mit einer durch eine Laserschneidkante begrenzten Aussparung zur Aufnahme eines elektronischen Schaltkreises in Form eines Chips oder Chipmoduls geschaffen.

Gemäß einer Ausführungsform ist die Beleuchtungsquelle ausgebildet, das Halbzeug mit UV-Licht zu beleuchten, oder die Bildkamera ist ausgebildet, die Bildaufnahme im UV-Licht zu erfassen. Dadurch wird beispielsweise der Vorteil erreicht, dass der Kontrast zwischen dem umlaufenden Bereich und benachbarten Bereichen in der erfassten Bildaufnahme verstärkt wird und sich somit der umlaufende Bereich besser erfassen lässt.

Gemäß einer Ausführungsform ist der Prozessor ausgebildet, innerhalb eines Lichtintensitätsbereichs, insbesondere Graustufenbereichs, liegende Pixel in der erfassten Bildaufnahme zu erfassen, um den umlaufenden Bereich zu erfassen. Dadurch wird beispielsweise der Vorteil erreicht, dass die Analyse und/oder Verarbeitung der Bildaufnahme durch den Prozessor effizienter durchgeführt werden kann.

Gemäß einer Ausführungsform ist der Prozessor ausgebildet, in der erfassten Bildaufnahme den umlaufenden Bereich mittels Kantendetektion, insbesondere Laplace-Kantendetektion, zu erfassen. Dadurch wird beispielsweise der Vorteil erreicht, dass die Analyse und/oder Verarbeitung der Bildaufnahme durch den Prozessor effizienter durchgeführt werden kann.

Gemäß einer Ausführungsform ist der Prozessor ausgebildet, vor der Erfassung des umlaufenden Bereichs in der erfassten Bildaufnahme bei Pixeln, deren Lichtintensität größer als ein erster Schwellenwert ist, die Lichtintensität durch eine erste, insbesondere maximale, Lichtintensität zu ersetzen, die größer als der erste Schwellenwert ist, und bei Pixeln, deren Lichtintensität kleiner als der erste Schwellenwert ist, die Lichtintensität durch eine zweite, insbesondere minimale, Lichtintensität zu ersetzen, die kleiner als der erste Schwellenwert ist. Durch eine derartige Binarisierung der erfassten Bildaufnahme wird beispielsweise der Vorteil erreicht, dass der umlaufende Bereich effizienter erfasst werden kann.

Gemäß einer Ausführungsform ist der Prozessor ausgebildet, vor der Erfassung des umlaufenden Bereichs in der erfassten Bildaufnahme bei Pixeln, deren Lichtintensität größer als der erste Schwellenwert ist und die einen zusammenhängenden Bereich ausbilden, dessen Fläche kleiner als ein zweiter Schwellenwert ist, die Lichtintensität durch die zweite, insbesondere minimale, Lichtintensität zu ersetzen. Dadurch wird beispielsweise der Vorteil erreicht, dass Rauschartefakte in der erfassten Bildaufnahme entfernt werden können, was das Erfassen des umlaufenden Bereichs in der Bildaufnahme erleichtert.

Gemäß einer Ausführungsform ist der Prozessor ausgebildet, vor der Erfassung des umlaufenden Bereichs in der erfassten Bildaufnahme bei Pixeln, die in der erfassten Bildaufnahme innerhalb des erfassten umlaufenden Bereichs liegen, d.h. innerhalb des Verlaufs der Laserschneidkante liegen, die Lichtintensität durch eine minimale Lichtintensität zu ersetzen. Dadurch wird beispielsweise der Vorteil erreicht, dass die durch die Laserschneidkante begrenzte Aussparung in der erfassten Bildaufnahme ausgeblendet werden kann, was das Erfassen des umlaufenden Bereichs in der Bildaufnahme erleichtert.

Gemäß einer Ausführungsform ist der Prozessor ausgebildet, in der erfassten Bildaufnahme den umlaufenden Bereich bzw. den Verlauf der Laserschneidkante anhand eines Musterverlaufs auszurichten oder zu zentrieren. Dabei kann der Prozessor ausgebildet sein, den Musterverlauf auf der Grundlage des Verlaufs der Laserschneidkante eines bereits verifizierten Halbzeugs zu definieren. Dadurch wird beispielsweise der Vorteil erreicht, dass der umlaufende Bereich in der Bildaufnahme effizienter erfasst werden kann.

Gemäß einer Ausführungsform ist der Prozessor ausgebildet, in der erfassten Bildaufnahme auf der Grundlage des erfassten umlaufenden Bereichs einen Mittelpunkt des erfassten umlaufenden Bereichs bzw. des Verlaufs der Laserschneidkante zu bestimmen. Dadurch wird beispielsweise der Vorteil erreicht, dass die Analyse und/oder Verarbeitung der Bildaufnahme durch den Prozessor effizienter durchgeführt werden kann.

Gemäß einer Ausführungsform ist der erfasste umlaufende Bereich in der erfassten Bildaufnahme im Wesentlichen rechteckig, wobei der Prozessor ausgebildet ist, in der erfassten Bildaufnahme Schnittpunkte von benachbarten Kanten des rechteckigen umlaufenden Bereichs zu bestimmen, um den Mittelpunkt des rechteckigen umlaufenden Bereichs bzw. des Verlaufs der Laserschneidkante zu bestimmen. Dabei kann der Prozessor ausgebildet sein, in der erfassten Bildaufnahme vom Mittelpunkt des Verlaufs der Laserschneidkante solange pixelweise voranzuschreiten, bis die Lichtintensität kleiner als ein Schwellenwert ist. Dadurch wird beispielsweise der Vorteil erreicht, dass sich auf einfache Art und Weise die Größe der durch die Laserschneidkante begrenzten Aussparung bestimmen lässt, die zur Verifizierung des Halbzeugs herangezogen werden kann.

Gemäß einem zweiten Aspekt betrifft die Erfindung ein Verfahren zum Verifizieren eines Halbzeugs zum Herstellen einer Chipkarte mit einer durch eine Laserschneidkante begrenzten Aussparung zur Aufnahme eines elektronischen Schaltkreises. Dabei umfasst das Verfahren das Beleuchten des Halbzeugs mit Licht einer vorbestimmten Wellenlänge mittels einer Beleuchtungsquelle; das Erfassen einer Bildaufnahme des beleuchteten Halbzeugs mit der durch die Laserschneidkante begrenzten Aussparung mittels einer Bildkamera; das Erfassen eines umlaufenden Bereichs mit einer Lichtintensität in der erfassten Bildaufnahme, welche größer als eine Lichtintensität eines in der erfassten Bildaufnahme außerhalb des umlaufenden Bereichs liegenden Bereichs ist, um den Verlauf der Laserschneidkante in der erfassten Bildaufnahme zu bestimmen; und das Verifizieren des Halbzeugs auf der Grundlage des Verlaufs der Laserschneidkante, wobei das Halbzeug zwischen der Beleuchtungsquelle und der Bildkamera angeordnet ist.

Gemäß einer Ausführungsform umfasst das Beleuchten des Halbzeugs mittels der Beleuchtungsquelle das Beleuchten des Halbzeugs mit UV-Licht oder das Erfassen einer Bildaufnahme des beleuchteten Halbzeugs mit der durch die Laserschneidkante begrenzten Aussparung mittels der Bildkamera das Erfassen einer Bildaufnahme des beleuchteten Halbzeugs im UV-Licht.

Die Inspektionsvorrichtung gemäß dem ersten Aspekt der Erfindung ist dazu ausgebildet, das Verfahren gemäß dem vierten Aspekt der Erfindung auszuführen. Weitere Ausführungsformen des Verfahrens gemäß dem vierten Aspekt der Erfindung ergeben sich aus den vorstehend beschriebenen Ausführungsformen der Inspektionsvorrichtung gemäß dem ersten Aspekt der Erfindung.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein schematisches Diagramm einer Inspektionsvorrichtung zum Verifizieren eines Halbzeugs zum Herstellen einer Chipkarte mit einer durch eine Laserschneidkante begrenzten Aussparung zur Aufnahme eines elektronischen Schaltkreises gemäß einer Ausführungsform;
- Fig. 2: ein Diagramm mit den Schritten eines Verfahrens zum Verifizieren eines Halbzeugs mit einer durch eine Laserschneidkante begrenzten Aussparung zur Aufnahme eines elektronischen Schaltkreises gemäß einer Ausführungsform; und
- Fig. 3: ein schematisches Diagramm einer Chipkarte gemäß einer Ausführungsform mit einer als Sicherheitsmerkmal dienenden Laserschneidkante.

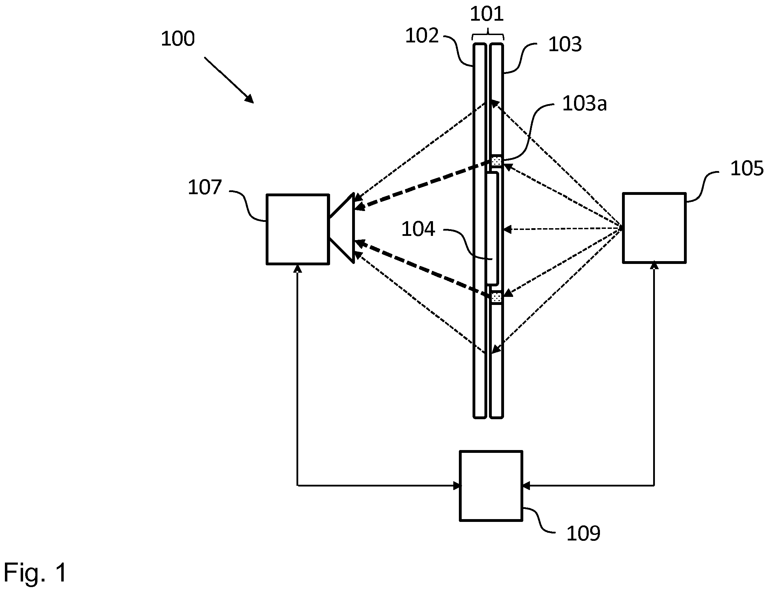

Figur 1 zeigt ein Diagramm in Form einer schematischen Seitenansicht (teilweise im Querschnitt) einer Inspektionsvorrichtung 100 zum Verifizieren eines Halbzeugs 101 mit einer durch eine Laserschneidkante 103a begrenzten Aussparung. Die Aussparung ist dazu ausgebildet, beispielsweise im Rahmen der Chipkartenherstellung einen elektronischen Schaltkreis 104 in Form eines Chips oder Chipmoduls aufzunehmen.

Bei der in Figur 1 gezeigten Ausführungsform umfasst das Halbzeug 101, das auch als Inlay bezeichnet wird, eine Trägerfolie 102 und eine Ausgleichsfolie 103. Der elektronische Schaltkreis 104 ist beispielsweise mittels eines Klebstoffs auf der Trägerfolie 102 befestigt. Die durch die Laserschneidkante 103a begrenzte Aussparung befindet sich in der Ausgleichsfolie 103, um den elektronischen Schaltkreis 104 aufzunehmen. Die Trägerfolie 102 und/oder die Ausgleichsfolie 103 können aus einem Kunststoffmaterial, insbesondere aus PC, PVC, ABS oder PET, bestehen.

Die in Figur 1 dargestellte Inspektionsvorrichtung 100 umfasst eine Beleuchtungsquelle 105, welche ausgebildet ist, das Halbzeug 101 und die darin ausgebildete Laserschneidkante 103a mit Licht einer vorbestimmten Wellenlänge zu beleuchten, wie dies in Figur 1 schematisch dargestellt ist. Gemäß einer Ausführungsform ist die Beleuchtungsquelle 105 ausgebildet, das Halbzeug 101 sowie die darin ausgebildete Laserschneidkante 103a mit UV-Licht zu beleuchten.

Die Inspektionsvorrichtung 100 umfasst ferner eine Bildkamera 107, welche ausgebildet ist, eine Bildaufnahme des beleuchteten Halbzeugs 101 mit der durch die Laserschneidkante 103a begrenzten Aussparung zu erfassen. Hierzu ist das Halbzeug 101 zwischen der Beleuchtungsquelle 105 und der Bildkamera 107 angeordnet.

Bei der Bildkamera 107 kann es sich insbesondere um eine Digitalbildkamera handeln. Gemäß einer Ausführungsform ist die Bildkamera 107 ausgebildet, die Bildaufnahme des beleuchteten Halbzeugs 101 mit der durch die Laserschneidkante 103a begrenzten Aussparung im UV-Licht zu erfassen.

Die Inspektionsvorrichtung 100 umfasst ferner einen Prozessor 109, welcher ausgebildet ist, in der erfassten Bildaufnahme einen umlaufenden Bereich bzw. eine räumliche Struktur mit einer Lichtintensität zu erfassen, welche größer als eine Lichtintensität eines in der erfassten Bildaufnahme außerhalb des umlaufenden Bereichs liegenden Bereichs ist, um in der erfassten Bildaufnahme den Verlauf der Laserschneidkante 103a zu bestimmen und das Halbzeug 101 auf der Grundlage des Verlaufs der Laserschneidkante 103a in der erfassten Bildaufnahme zu verifizieren.

Der Prozessor 109 kann Teil eines Computers (nicht dargestellt) sein, der ein Display zur Anzeige der von der Bildkamera 107 erfassten und vom Prozessor 109 gegebenenfalls weiter verarbeiteten Bildaufnahme umfassen kann.

Gemäß einer Ausführungsform ist der Prozessor 109 der Inspektionsvorrichtung 100 ausgebildet, innerhalb eines Lichtintensitätsbereichs, insbesondere Graustufenbereichs, liegende Pixel in der erfassten Bildaufnahme zu erfassen, um den umlaufenden Bereich zu erfassen.

Gemäß einer Ausführungsform ist der Prozessor 109 ausgebildet, in der erfassten Bildaufnahme den umlaufenden Bereich mittels Kantendetektion, insbesondere Laplace-Kantendetektion, zu erfassen.

Gemäß einer Ausführungsform ist der Prozessor 109 ausgebildet, vor der Erfassung des umlaufenden Bereichs in der erfassten Bildaufnahme bei Pixeln, deren Lichtintensität größer als ein erster Schwellenwert ist, die Lichtintensität vorzugsweise durch die maximale Lichtintensität zu ersetzen, und bei Pixeln, deren Lichtintensität kleiner als der erste Schwellenwert ist, die Lichtintensität vorzugsweise durch die minimale Lichtintensität zu ersetzen. Mittels einer derartigen "Binarisierung" der Bildaufnahme durch den Prozessor 109, kann der umlaufende Bereich in der binarisierten Bildaufnahme effizienter erfasst werden.

Zur Verminderung von Rauschartefakten in der Bildaufnahme außerhalb der durch die Laserschneidkante 103a begrenzten Aussparung ist gemäß einer Ausführungsform der Prozessor 109 ausgebildet, vor der Erfassung des umlaufenden Bereichs in der erfassten Bildaufnahme bei Pixeln, deren Lichtintensität größer als der erste Schwellenwert ist und die einen zusammenhängenden Bereich ausbilden, dessen Fläche kleiner als ein zweiter Schwellenwert ist, die Lichtintensität vorzugsweise durch die minimale Lichtintensität zu ersetzen.

Zur Ausblendung der durch die Laserschneidkante 103a begrenzten Aussparung in der erfassten Bildaufnahme ist gemäß einer Ausführungsform der Prozessor 109 ausgebildet, vor der Erfassung des umlaufenden Bereichs in der erfassten Bildaufnahme bei Pixeln, die in der erfassten Bildaufnahme innerhalb des erfassten umlaufenden Bereichs liegen, d.h. innerhalb des Verlaufs der Laserschneidkante 103a liegen, die Lichtintensität durch die minimale Lichtintensität zu ersetzen. Durch die Ausblendung bzw. Maskierung der durch die Laserschneidkante 103a begrenzten Aussparung in der erfassten Bildaufnahme kann das Erfassen des umlaufenden Bereichs in der Bildaufnahme erleichtert werden.

Ferner kann gemäß einer Ausführungsform der Prozessor 109 ausgebildet sein, in der erfassten Bildaufnahme eine Kontrastverstärkung durchzuführen. Hierzu kann der Prozessor 109 ausgebildet sein, vor der Erfassung des umlaufenden Bereichs in der erfassten Bildaufnahme bei benachbarten Pixeln, deren Lichtintensitäten sich um mehr als einen vordefinierten Schwellenwert unterscheiden, die Lichtintensitäten vorzugsweise durch maximale Lichtintensitäten zu ersetzen.

Gemäß einer Ausführungsform ist der Prozessor 109 ausgebildet, in der erfassten Bildaufnahme den umlaufenden Bereich bzw. den Verlauf der Laserschneidkante 103a anhand eines Musterverlaufs auszurichten oder zu zentrieren. Dabei kann der Prozessor 109 ausgebildet sein, den Musterverlauf auf der Grundlage des Verlaufs der Laserschneidkante eines bereits durch die Inspektionsvorrichtung 100 verifizierten Halbzeugs zu definieren.

Zur genauen Bestimmung der Größe des umlaufenden Bereichs bzw. der durch die Laserschneidkante 103a begrenzten Aussparung in der erfassten Bildaufnahme, die ebenfalls zur Verifizierung des Halbzeugs 101 herangezogen werden kann, ist gemäß einer Ausführungsform der Prozessor 109 ausgebildet, in der erfassten Bildaufnahme auf der Grundlage des erfassten umlaufenden Bereichs einen Mittelpunkt des erfassten umlaufenden Bereichs bzw. des Verlaufs der Laserschneidkante 103a zu bestimmen.

Gemäß einer Ausführungsform ist der erfasste umlaufende Bereich in der erfassten Bildaufnahme im Wesentlichen rechteckig, wobei der Prozessor 109 ferner ausgebildet ist, in der erfassten Bildaufnahme Kantenschnittpunkte von benachbarten Kanten des rechteckigen umlaufenden Bereichs zu bestimmen, um den Mittelpunkt des rechteckigen umlaufenden Bereichs bzw. des Verlaufs der Laserschneidkante 103a zu bestimmen. Der Mittelpunkt des rechteckigen umlaufenden Bereichs bzw. des Verlaufs der Laserschneidkante 103a lässt sich beispielsweise bestimmen, indem der Schnittpunkt der Diagonalen bestimmt wird, welche die Kantenschnittpunkte miteinander verbinden.

Ferner kann der Prozessor 109 ausgebildet sein, in der erfassten Bildaufnahme vom Mittelpunkt des Verlaufs der Laserschneidkante 103a solange vorzugsweise pixelweise, d.h. Pixel für Pixel, voranzuschreiten, und zwar horizontal und vertikal sowohl in positiver als auch in negativer Richtung, bis die Lichtintensität des entsprechenden Pixel der erfassten Bildaufnahme kleiner als ein vordefinierter Schwellenwert ist, wodurch der äußere Rand des umlaufenden Bereichs höherer Lichtintensität in der erfassten Bildaufnahme definiert wird. Für den Fall, dass der äußere Rand des umlaufenden Bereichs höherer Lichtintensität in der erfassten Bildaufnahme nicht gut genug zu erkennen sein sollte, würde dieser Algorithmus in der erfassten Bildaufnahme spätestens bei dem "verrauschten" Bereich des Halbzeugs 101 außerhalb der Laserschneidkante 103a beendet werden, wodurch der entstehende Messfehler auf ein Mindestmaß beschränkt werden kann.

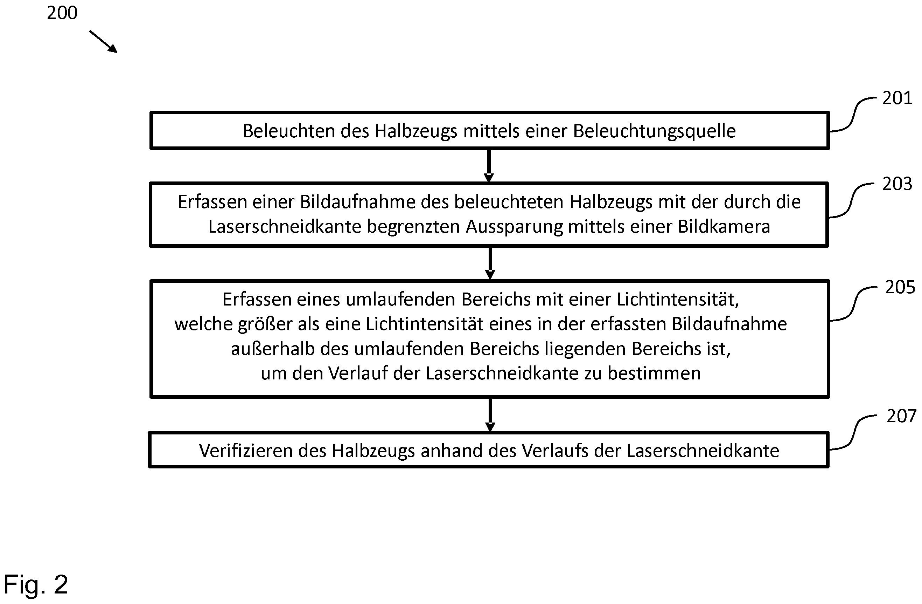

Figur 2 zeigt ein schematisches Diagramm eines Verfahrens 200 zum Verifizieren eines Halbzeugs 101 zum Herstellen einer Chipkarte mit einer durch eine Laserschneidkante 103a begrenzten Aussparung zur Aufnahme eines elektronischen Schaltkreises 104. Dabei umfasst das Verfahren 200 das Beleuchten 201 des Halbzeugs 101 mit Licht einer vorbestimmten Wellenlänge mittels einer Beleuchtungsquelle 105; das Erfassen 203 einer Bildaufnahme des beleuchteten Halbzeugs 101 mit der durch die Laserschneidkante 103a begrenzten Aussparung mittels einer Bildkamera 107; das Erfassen 205 eines umlaufenden Bereichs mit einer Lichtintensität in der erfassten Bildaufnahme, welche größer als eine Lichtintensität eines in der erfassten Bildaufnahme außerhalb des umlaufenden Bereichs liegenden Bereichs ist, um den Verlauf der Laserschneidkante 103a in der erfassten Bildaufnahme zu bestimmen; und das Verifizieren 207 des Halbzeugs 101 auf der Grundlage des Verlaufs der Laserschneidkante 103a.

Gemäß einer Ausführungsform umfasst der Schritt 201 des Beleuchtens des Halbzeugs 101 mittels der Beleuchtungsquelle 105 das Beleuchten des Halbzeugs 101 mit UV-Licht. Gemäß einer Ausführungsform umfasst der Schritt 203 des Erfassens einer Bildaufnahme des beleuchteten Halbzeugs 101 mit der durch die Laserschneidkante 103a begrenzten Aussparung mittels der Bildkamera 107 das Erfassen einer Bildaufnahme des beleuchteten Halbzeugs 101 im UV-Licht.

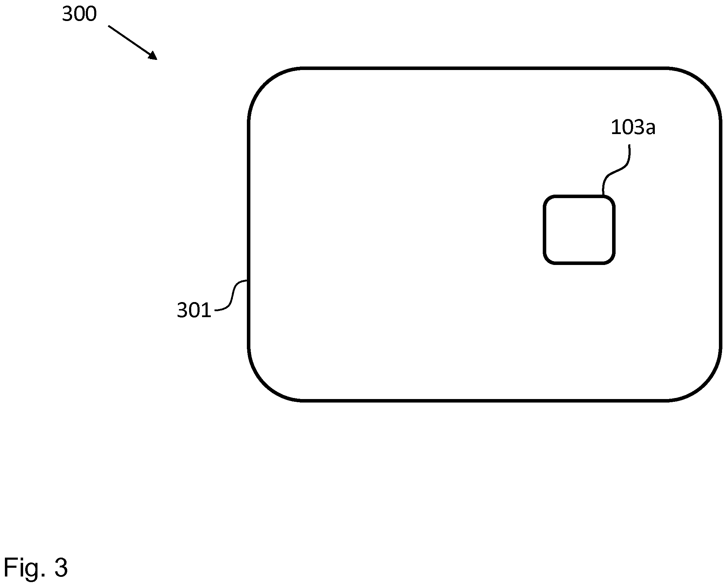

Figur 3 zeigt eine schematische Draufsicht einer beispielhaften Chipkarte 300 mit einem Kartenkörper 301, der ein Halbzeug, beispielsweise das in Figur 1 dargestellte Halbzeug 101, mit einer Laserschneidkante 103a aufweist, wobei die Laserschneidkante 103a als Sicherheitsmerkmal der Chipkarte 300 dient. Dabei kann die Laserschneidkante 103a eine Aussparung begrenzen, in die ein elektronischer Schaltkreis (nicht in Figur 3 gezeigt) eingebracht ist, beispielsweise der in Figur 1 dargestellte elektronische Schaltkreis 104. Die Chipkarte 300 kann jedoch alternativ oder zusätzlich eine Laserschneidkante 103a aufweisen, die ausschließlich als Sicherheitsmerkmal dient, also nicht dafür bestimmt ist, mit einem elektronischen Schaltkreis bestückt zu werden. Die Laserschneidkante 103a der Chipkarte 300 lässt sich insbesondere dadurch als Sicherheitsmerkmal verwenden, dass die Chipkarte 300 insbesondere mit UV-Licht beleuchtet wird, eine Bildaufnahme der beleuchteten Chipkarte 300 erfasst wird und das Vorhandensein der Laserschneidkante 103a in der erfassten Bildaufnahme überprüft wird.

### BEZUGSZEICHENLISTE

- 100: Inspektionsvorrichtung
- 101: Halbzeug
- 102: Trägerfolie
- 103: Ausgleichsfolie
- 103a: Laserschneidkante
- 104: elektronischer Schaltkreis
- 105: Beleuchtungsquelle
- 107: Bildkamera
- 109: Prozessor

- 200: Verfahren zum Verifizieren eines Halbzeugs
- 201: Beleuchten des Halbzeugs
- 203: Erfassen einer Bildaufnahme des Halbzeugs
- 205: Erfassen eines Verlaufs einer Laserschneidkante
- 207: Verifizieren des Halbzeugs

- 300: Chipkarte
- 301: Kartenkörper

## Patentansprüche

1. Inspektionsvorrichtung (100) zum Verifizieren eines Halbzeugs (101) zum Herstellen einer Chipkarte mit einer durch eine Laserschneidkante (103a) begrenzten Aussparung zur Aufnahme eines elektronischen Schaltkreises (104), wobei die Laserschneidkante (103a) als Sicherheitsmerkmal der Chipkarte dient, mit:
einer Beleuchtungsquelle (105), welche ausgebildet ist, das Halbzeug (101) mit Licht einer vorbestimmten Wellenlänge zu beleuchten;
einer Bildkamera (107), welche ausgebildet ist, eine Bildaufnahme des beleuchteten Halbzeugs (101) mit der durch die Laserschneidkante (103a) begrenzten Aussparung zu erfassen; und
einem Prozessor (109), welcher ausgebildet ist, in der erfassten Bildaufnahme einen umlaufenden Bereich mit einer Lichtintensität zu erfassen, welche größer als eine Lichtintensität eines in der erfassten Bildaufnahme außerhalb des umlaufenden Bereichs liegenden Bereichs ist, um den Verlauf der Laserschneidkante (103a) zu bestimmen und das Halbzeug (101) auf der Grundlage des Verlaufs der Laserschneidkante (103a) zu verifizieren,
wobei die Inspektionsvorrichtung (100) so ausgebildet ist, dass das Halbzeug (101) zwischen der Beleuchtungsquelle (105) und der Bildkamera (107) anordnenbar ist.

2. Inspektionsvorrichtung (100) nach Anspruch 1, wobei die Beleuchtungsquelle (105) ausgebildet ist, das Halbzeug (101) mit UV-Licht zu beleuchten, oder die Bildkamera (107) ausgebildet ist, die Bildaufnahme im UV-Licht zu erfassen.

3. Inspektionsvorrichtung (100) nach Anspruch 1 oder 2, wobei der Prozessor (109) ausgebildet ist, innerhalb eines Lichtintensitätsbereichs, insbesondere Graustufenbereichs, liegende Pixel in der erfassten Bildaufnahme zu erfassen, um den umlaufenden Bereich zu erfassen.

4. Inspektionsvorrichtung (100) nach einem der vorstehenden Ansprüche, wobei der Prozessor (109) ausgebildet ist, in der erfassten Bildaufnahme den umlaufenden Bereich mittels Kantendetektion, insbesondere Laplace-Kantendetektion, zu erfassen.

5. Inspektionsvorrichtung (100) nach einem der vorstehenden Ansprüche, wobei der Prozessor (109) ausgebildet ist, vor der Erfassung des umlaufenden Bereichs in der erfassten Bildaufnahme bei Pixeln, deren Lichtintensität größer als ein erster Schwellenwert ist, die Lichtintensität durch einen erste, insbesondere maximale, Lichtintensität zu ersetzen, die größer als der erste Schwellenwert ist, und bei Pixeln, deren Lichtintensität kleiner als der erste Schwellenwert ist, die Lichtintensität durch eine zweite, insbesondere minimale, Lichtintensität zu ersetzen, die kleiner als der erste Schwellenwert ist.

6. Inspektionsvorrichtung (100) nach Anspruch 5, wobei der Prozessor (109) ausgebildet ist, vor der Erfassung des umlaufenden Bereichs in der erfassten Bildaufnahme bei Pixeln, deren Lichtintensität größer als der erste Schwellenwert ist und die einen zusammenhängenden Bereich ausbilden, dessen Fläche kleiner als ein zweiter Schwellenwert ist, die Lichtintensität durch die zweite, insbesondere minimale, Lichtintensität zu ersetzen.

7. Inspektionsvorrichtung (100) nach einem der vorstehenden Ansprüche, wobei der Prozessor (109) ausgebildet ist, vor der Erfassung des umlaufenden Bereichs in der erfassten Bildaufnahme bei Pixeln, die in der erfassten Bildaufnahme innerhalb des Verlaufs der Laserschneidkante (103a) liegen, die Lichtintensität durch eine minimale Lichtintensität zu ersetzen.

8. Inspektionsvorrichtung (100) nach einem der vorstehenden Ansprüche, wobei der Prozessor (109) ausgebildet ist, in der erfassten Bildaufnahme den Verlauf der Laserschneidkante (103a) anhand eines Musterverlaufs auszurichten oder zu zentrieren.

9. Inspektionsvorrichtung (100) nach einem der vorstehenden Ansprüche, wobei der Prozessor (109) ausgebildet ist, in der erfassten Bildaufnahme auf der Grundlage des erfassten umlaufenden Bereichs einen Mittelpunkt des Verlaufs der Laserschneidkante (103a) zu bestimmen.

10. Inspektionsvorrichtung (100) nach Anspruch 9, wobei in der erfassten Bildaufnahme der erfasste umlaufende Bereich im Wesentlichen rechteckig ist und wobei der Prozessor (109) ausgebildet ist, in der erfassten Bildaufnahme Schnittpunkte von benachbarten Kanten des rechteckigen umlaufenden Bereichs zu bestimmen, um den Mittelpunkt des Verlaufs der Laserschneidkante (103a) zu bestimmen.

11. Verfahren (200) zum Verifizieren eines Halbzeugs (101) zum Herstellen einer Chipkarte mit einer durch eine Laserschneidkante (103a) begrenzten Aussparung zur Aufnahme eines elektronischen Schaltkreises, wobei die Laserschneidkante (103a) als Sicherheitsmerkmal der Chipkarte dient, mit:
Beleuchten (201) des Halbzeugs (101) mit Licht einer vorbestimmten Wellenlänge mittels einer Beleuchtungsquelle (105);
Erfassen (203) einer Bildaufnahme des beleuchteten Halbzeugs (101) mit der durch die Laserschneidkante (103a) begrenzten Aussparung mittels einer Bildkamera (107);
Erfassen (205) eines umlaufenden Bereichs mit einer Lichtintensität in der erfassten Bildaufnahme, welche größer als eine Lichtintensität eines in der erfassten Bildaufnahme außerhalb des umlaufenden Bereichs liegenden Bereichs ist, um den Verlauf der Laserschneidkante (103a) zu bestimmen; und
Verifizieren (207) des Halbzeugs (101) auf der Grundlage des Verlaufs der Laserschneidkante (103a),
wobei das Halbzeug (101) zwischen der Beleuchtungsquelle (105) und der Bildkamera (107) angeordnet ist.

12. Verfahren (200) nach Anspruch 11, wobei das Beleuchten (201) des Halbzeugs (101) mittels der Beleuchtungsquelle (105) das Beleuchten des Halbzeugs (101) mit UV-Licht umfasst oder das Erfassen (203) einer Bildaufnahme des beleuchteten Kartenkörpers (101) mit der durch die Laserschneidkante (103a) begrenzten Aussparung mittels der Bildkamera (107) das Erfassen einer Bildaufnahme des beleuchteten Halbzeugs (101) im UV-Licht umfasst.

## Claims

1. An inspection device (100) for verifying a semi-finished product (101) for producing a chip card with a recess delimited by a laser cutting edge (103a) for receiving an electronic circuit (104), wherein the laser cutting edge (103a) serves as a security feature of the chip card, the inspection device comprising:
an illumination source (105) configured to illuminate the semi-finished product (101) with light of a predetermined wavelength;
an image camera (107) configured to capture an image acquisition of the illuminated semi-finished product (101) with the recess delimited by the laser cutting edge (103a); and
a processor (109) configured to detect a circumferential region in the captured image acquisition with a light intensity which is greater than a light intensity of a region situated outside the circumferential region in the captured image acquisition in order to determine the course of the laser cutting edge (103a) and verify the semi-finished product (101) on the basis of the course of the laser cutting edge (103a),
wherein the inspection device (100) is configured such that the semi-finished product (101) is arrangable between the illumination source (105) and the image camera (107).

2. The inspection device (100) according to claim 1, wherein the illumination source (105) is configured to illuminate the semi-finished product (101) with UV light, or the image camera (107) is configured to capture the image acquisition in UV light.

3. The inspection device (100) according to claim 1 or 2, wherein the processor (109) is configured to detect pixels situated within a light intensity range, in particular a grayscale range, in the captured image acquisition in order to detect the circumferential region.

4. The inspection device (100) according to one of the preceding claims, wherein the processor (109) is configured to detect the circumferential region in the captured image acquisition by means of edge detection, in particular Laplace edge detection.

5. The inspection device (100) according to one of the preceding claims, wherein the processor (109) is configured to replace, prior to the detection of the circumferential region in the captured image acquisition, the light intensity for pixels whose light intensity is greater than a first threshold value with a first, in particular maximum, light intensity that is greater than the first threshold value and for pixels whose light intensity is less than the first threshold value with a second, in particular minimum, light intensity that is smaller than the first threshold value.

6. The inspection device (100) according to claim 5, wherein the processor (109) is configured to replace, prior to the detection of the circumferential region in the captured image acquisition, the light intensity for pixels whose light intensity is greater than the first threshold value and which form a contiguous region whose area is smaller than a second threshold value with the second, in particular minimum, light intensity.

7. The inspection device (100) according to one of the preceding claims, wherein the processor (109) is configured to replace, prior to the detection of the circumferential region in the captured image acquisition, the light intensity for pixels that are situated in the captured image acquisition within the course of the laser cutting edge (103a) with a minimum light intensity.

8. The inspection device (100) according to one of the preceding claims, wherein the processor (109) is configured to align or center the course of the laser cutting edge (103a) in the captured image acquisition using a pattern course.

9. The inspection device (100) according to one of the preceding claims, wherein the processor (109) is configured to determine a center point of the course of the laser cutting edge (103a) in the captured image acquisition on the basis of the detected circumferential region.

10. The inspection device (100) according to claim 9, wherein in the captured image acquisition the detected circumferential region is essentially rectangular and wherein the processor (109) is configured to determine intersection points of adjacent edges of the rectangular circumferential region in the captured image acquisition in order to determine the center point of the course of the laser cutting edge (103a).

11. A method (200) for verifying a semi-finished product (101) for producing a chip card with a recess delimited by a laser cutting edge (103a) for receiving an electronic circuit, wherein the laser cutting edge (103a) serves as a security feature of the chip card, the method comprising:
Illuminating (201) the semi-finished product (101) with light of a predetermined wavelength by means of an illumination source (105);
Capturing (203) an image acquisition of the illuminated semi-finished product (101) with the recess delimited by the laser cutting edge (103a) by means of an image camera (107);
Detecting (205) a circumferential region in the captured image acquisition with a light intensity which is greater than a light intensity of a region situated outside the circumferential region in the captured image acquisition, in order to determine the course of the laser cutting edge (103a); and
Verifying (207) the semi-finished product (101) on the basis of the course of the laser cutting edge (103a),
wherein the semi-finished product (101) is arranged between the illumination source (105) and the image camera (107).

12. The method (200) according to claim 11, wherein the illuminating (201) of the semi-finished product (101) by means of the illumination source (105) comprises illuminating the semi-finished product (101) with UV light or capturing (203) an image acquisition of the illuminated card body (101) with the recess delimited by the laser cutting edge (103a) by means of the image camera (107) comprises capturing an image acquisition of the illuminated semi-finished product (101) in UV light.

## Revendications

1. Dispositif d'inspection (100) destiné à vérifier un produit semi-fini (101) pour réaliser une carte à puce pourvue d'un évidement délimité par un bord de coupe laser (103a) et destiné à recevoir un circuit électronique (104), le bord de coupe laser (103a) servant de caractéristique de sécurité de la carte à puce, ledit dispositif comprenant :
une source d'éclairage (105) qui est conçue pour éclairer le produit semi-fini (101) avec une lumière d'une longueur d'onde prédéterminée ;
une caméra d'image (107) qui est conçue pour acquérir un enregistrement d'image du produit semi-fini éclairé (101) pourvu de l'évidement délimité par le bord de coupe laser (103a) ; et
un processeur (109) qui est conçu pour détecter dans l'enregistrement d'image acquis une région circonférentielle ayant une intensité lumineuse qui est supérieure à une intensité lumineuse d'une région située à l'extérieur de la région circonférentielle dans l'enregistrement d'image acquis afin de déterminer le tracé du bord de coupe laser (103a) et vérifier le produit semi-fini (101) sur la base du tracé du bord de coupe laser (103a),
le dispositif d'inspection (100) étant conçu de telle sorte que le produit semi-fini (101) peut être disposé entre la source d'éclairage (105) et la caméra d'image (107) .

2. Dispositif d'inspection (100) selon la revendication 1, la source d'éclairage (105) étant conçue pour éclairer le produit semi-fini (101) avec de la lumière UV, ou la caméra d'image (107) étant conçue pour acquérir l'enregistrement d'image dans la lumière UV.

3. Dispositif d'inspection (100) selon la revendication 1 ou 2, le processeur (109) étant conçu pour détecter des pixels se trouvant dans une région d'intensité lumineuse, en particulier une région de niveau de gris, dans l'enregistrement d'image acquis afin de détecter la région environnante.

4. Dispositif d'inspection (100) selon l'une des revendications précédentes, le processeur (109) étant conçu pour détecter, au moyen d'une détection de bord, en particulier une détection de bord de Laplace, la région circonférentielle dans l'enregistrement d'image acquis.

5. Dispositif d'inspection (100) selon l'une des revendications précédentes, le processeur (109) étant conçu pour remplacer l'intensité lumineuse par une première intensité lumineuse, notamment maximale, qui est supérieure à la première valeur seuil, avant la détection de la région circonférentielle dans l'enregistrement d'image acquis pour des pixels dont l'intensité lumineuse est supérieure à une première valeur seuil, et dans le cas de pixels dont l'intensité lumineuse est inférieure à la première valeur seuil, pour remplacer l'intensité lumineuse par une deuxième intensité lumineuse, notamment minimale, inférieure à la première valeur seuil.

6. Dispositif d'inspection (100) selon la revendication 5, le processeur (109) étant conçu pour remplacer l'intensité lumineuse par la deuxième intensité lumineuse, notamment minimale, avant la détection de la région circonférentielle dans l'enregistrement d'image acquis pour des pixels dont l'intensité lumineuse est supérieure à la première valeur seuil et qui forment une région contiguë dont la surface est inférieure à une deuxième valeur seuil.

7. Dispositif d'inspection (100) selon l'une des revendications précédentes, le processeur (109) étant conçu pour remplacer l'intensité lumineuse par une intensité lumineuse minimale avant la détection de la région circonférentielle dans l'enregistrement d'image acquis pour des pixels qui sont situés dans l'enregistrement d'image acquis à l'intérieur du tracé du bord de coupe laser (103a).

8. Dispositif d'inspection (100) selon l'une des revendications précédentes, le processeur (109) étant conçu pour orienter ou centrer le tracé du bord de coupe laser (103a) dans l'enregistrement d'image acquis en utilisant un tracé de motif.

9. Dispositif d'inspection (100) selon l'une des revendications précédentes, le processeur (109) étant conçu pour déterminer un point central du tracé du bord de coupe laser (103a) dans l'enregistrement d'image acquis sur la base de la région circonférentielle détectée.

10. Dispositif d'inspection (100) selon la revendication 9, dans l'enregistrement d'image acquis, la région circonférentielle détectée est sensiblement rectangulaire et le processeur (109) étant conçu pour déterminer des points d'intersection de bords adjacents de la région circonférentielle rectangulaire dans l'enregistrement d'image acquis afin de déterminer le point central du tracé du bord de coupe laser (103a).

11. Procédé (200) de vérification d'un produit semi-fini (101) pour réaliser une carte à puce munie d'un évidement délimité par un bord de coupe laser (103a) et destiné à recevoir un circuit électronique, le bord de coupe laser (103a) servant de caractéristique de sécurité de la carte à puce, le procédé comprenant les étapes suivantes :
éclairer (201) le produit semi-fini (101) avec une lumière d'une longueur d'onde prédéterminée au moyen d'une source d'éclairage (105) ;
acquérir (203) au moyen d'une caméra d'image (107) un enregistrement d'image du produit semi-fini éclairé (101) muni de l'évidement délimité par le bord de coupe laser (103a) ;
détecter (205) dans l'enregistrement d'image acquis une région circonférentielle ayant une intensité lumineuse qui est supérieure à une intensité lumineuse d'une région située à l'extérieur de la région circonférentielle dans l'enregistrement d'image acquis afin de déterminer le tracé du bord de coupe laser (103a) ; et
vérifier (207) le produit semi-fini (101) sur la base du tracé du bord de coupe laser (103a),
le produit semi-fini (101) étant disposé entre la source d'éclairage (105) et la caméra d'image (107).

12. Procédé (200) selon la revendication 11, l'éclairage (201) du produit semi-fini (101) au moyen de la source d'éclairage (105) comprenant l'éclairage du produit semi-fini (101) avec une lumière UV ou l'acquisition (203), au moyen de la caméra d'image (107), d'un enregistrement d'image du corps de carte éclairé (101) muni de l'évidement délimité par le bord de coupe laser (103a) comprenant l'acquisition d'un enregistrement d'image du produit semi-fini éclairé (101) dans la lumière UV.
